# EUROPÄISCHE PATENTSCHRIFT

(11) **EP 1 475 296 B1**
(45) Veröffentlichungstag und Bekanntmachung des Hinweises auf die Patenterteilung: **27.06.2007**
(21) Anmeldenummer: 04010027.3
(22) Anmeldetag: 28.04.2004
(51) Int. Cl.: B62D 29/04, B62D 25/06

(54) **Karosserieaussenbauteil aus Kunststoff**
Exterior bodywork part from plastic
Pièce extérieure de carrosserie en matière synthétique

(30) Priorität: 08.05.2003 DE 10320438
(43) Veröffentlichungstag der Anmeldung: 10.11.2004
(73) Patentinhaber: Wilhelm Karmann GmbH, 49084 Osnabrück (DE)
(72) Erfinder: van Berkum, Wim, 49179 Osterkappeln (DE)

(56) Entgegenhaltungen:
- EP-A- 1 155 942
- EP-A- 1 325 862
- DE-A- 10 158 955
- DE-C- 19 805 884
- GB-A- 1 303 492
- PATENT ABSTRACTS OF JAPAN Bd. 0120, Nr. 41 (M-666), 6. Februar 1988 (1988-02-06) -& JP 62 194980 A (MAZDA MOTOR CORP), 27. August 1987 (1987-08-27)

## Beschreibung

Die Erfindung betrifft ein Karosserieaußenbauteil aus Kunststoff zur Befestigung an einer Trägerstruktur, wie bspw. ein Dach.

Die Verwendung von Kunststoff zur Herstellung von Karosserieaußenbauteilen ist besonders bei öffnungsfähigen Dächern bzw. Dachteilen von Vorteil, bei denen manuell oder motorisch möglichst geringe Massen bewegt werden sollen.

Karosserieaußenbauteile bzw. -außenhautteile für Kraftfahrzeuge können bspw. aus duroplastischen Materialien gefertigt werden und mit unterschiedlichen Befestigungstechniken, z.B. mit Klemmelementen oder durch Kleben, mit der meist aus Metall bestehenden tragenden Struktur des Kraftfahrzeugs verbunden werden. Durch Füllungen wie z.B. Glasfasern kann den duroplastischen Materialien ein geringer Wärmeausdehnungskoeffizient gegeben werden, so daß auch bei großen Temperaturunterschieden nur relativ geringe Längenunterschiede in aneinandergrenzenden Karosserieteilen auftreten. Nachteilig ist allerdings bei der Verwendung von duroplastischen Materialien, daß damit eine Anwendung des Zweikomponenten-Verfahrens in Spritzgußtechnik mit z.B. Integration des Gasinnendruck-Verfahrens, das durch die Einlage von Folien oder der Verwendung von verschiedenen Kunststoffen vielfältige gestalterische und funktionelle Anwendungen erschließt, nicht möglich ist. Das Zweikomponenten-Verfahren ist nur für thermoplastische Kunststoffe anwendbar, die allerdings einen relativ großen Wärmeausdehnungskoeffizienten besitzen, so daß bei Temperaturunterschieden erhebliche Ausdehnungen auftreten können, die insbesondere das Fugenbild (Spaltmaße) eines Kraftfahrzeugs beeinträchtigen können.

Aus der DE 198 05 884 C1 ist ein Karosserieaußenbauteil aus Kunststoff bekannt, das im wesentlichen rechteckig ausgebildet ist und eine umlaufende gewinkelte Halterung mit einer Winkelseite und einer Winkelauflage zur Verbindung mit einem metallischen Träger aufweist, wobei zur Reduzierung von temperaturbedingten Verformungen des Bauteils die Halterung im Bereich zwischen den Ecken unterschiedlich ausgebildet und dadurch verstärkt ist, bspw. durch eine zu den Seitenmitten hin zunehmende Wandstärke der Winkelseite. Dieses Bauteil baut allerdings hoch auf und ist aufwendig herzustellen.

Aus der nachveröffentlichten EP 1 325 862 A2 ist ein modulartiges Fahrzeugdach mit einer äußeren festen Dachhaut als Außenschale und einer sandwichartig damit verbundenen Innenschale bekannt. In das Fahrzeugdach ist in etwa bündig mit der Außenschale eine vorzugsweise durchsichtige Platte eingelassen. Der Spaltraum dazwischen kann durch ein elastisches Dichtungsprofil geschlossen sein.

Aus der JP 62 194 980 ist ein Kunststoffdach für Kraftfahrzeuge bekannt, das randseitig durch Kleben befestigt ist.

Die Aufgabe der Erfindung besteht daher darin, ein insbesondere im Zweikomponenten-Verfahren aus thermoplastischem Kunststoff herstellbares Karosserieaußenbauteil zu schaffen, welches in der Lage sein soll, temperaturbedingte Längenänderungen in mindestens einer Richtung aufzunehmen.

Diese Aufgabe wird erfindungsgemäß durch ein Karosserieaußenbauteil aus Kunststoff zur Befestigung an einer Tragstruktur gelöst, mit einem Innenbereich und einem daran angrenzenden Randbereich, wobei ein Dehnungsausgleichselement zumindest entlang eines Teilabschnitts des Randbereichs angeordnet und integral damit verbunden ist, und welches sich dadurch auszeichnet, daß das Karossieraußenbauteil im Zweikomponenten-Spritzgießverfahren hergestellt ist.

Diese Integration eines die insbesondere temperaturbedingte Dehnung aufnehmenden Elements bietet die Möglichkeit der Herstellung leichter, großflächiger Karosserieaußenbauteile bei vielfältigen Designmöglichkeiten durch das an sich bekannte Zweikomponenten-Verfahren, z.B. mittels Einlage von Strukturfolien kombiniert mit durchsichtigen Bereichen. Der Innenbereich besteht aus einem relativ starren, sich bei Temperaturänderungen relativ stark dehnenden/zusammenziehenden Material, wohingegen das Dehnungsausgleichselement aus einem im Vergleich dazu nachgiebigen, elastischen Material besteht.

Bevorzugt sieht die Erfindung vor, daß das Dehnungsausgleichselement einstückig mit dem Innenbereich verbunden ist, wobei beide Teile gemeinsam im Zweikomponenten-Spritzgießverfahren hergestellt sind, und zwar zweckmäßigerweise aus thermoplastischem Kunststoff.

Alternativ zu einer einstückigen Verbindung zwischen Dehnungsausgleichselement und dem Innenbereich bzw. dem Randbereich des Karosserieaußenbauteils könnte vorgesehen sein, daß das Dehnungsausgleichselement formschlüssig und ggf. zugfest mit dem Innenbereich verbunden ist, bspw. durch eine ineinandergreifende Profilierung, wodurch sich ebenfalls eine feste und dichte Verbindung erzielen läßt.

Zweckmäßigerweise ist vorgesehen, daß das Dehnungsausgleichselement parallel zu dem Randbereich angeordnet ist, bspw. umlaufend um einen größeren Teil des Randbereichs oder vollständig geschlossen um diesen herum. Es kann vorgesehen sein, daß das Dehnungsausgleichselement mindestens an zwei Randabschnitten angeordnet ist, die nicht parallel zueinander verlaufen, so daß ein Ausgleich von Ausdehnungsbewegungen in unterschiedlichen Richtungen möglich ist.

Zweckmäßigerweise ist vorgesehen, daß das Dehnungsausgleichselement aus einem elastischen Kunststoff besteht.

In einer speziellen Ausführungsform der Erfindung kann das Dehnungsausgleichselement zwei in einem Abstand verlaufende, in entgegengesetzten Richtungen abknickende Filmscharniere aufweisen, durch die ein Absatz gebildet wird.

Weiterhin kann vorgesehen sein, daß das Dehnungsausgleichselement an der Tragstruktur abgestützt ist. Außerdem kann vorgesehen sein, daß der innerhalb des Randbereichs befindliche Innenbereich des Karosserieaußenbauteils an der Tragstruktur abgestützt ist.

Sofern die Tragstruktur nicht aus Metall besteht, kann sie im Gasinnendruck-Verfahren aus Kunststoff hergestellt sein, und zwar insbesondere einstückig mit dem Karosserieaußenbauteil. In diesem Fall kann die Tragstruktur ein Hohlprofil aufweisen.

Es besteht die Möglichkeit, daß das Karosserieaußenbauteil zusammen mit der Tragstruktur in einem Werkzeug hergestellt ist.

In einer zweckmäßigen Weiterbildung der Erfindung kann vorgesehen sein, daß der Innenbereich des Karosserieaußenbauteils mit einem durchsichtigen Kunststoff versehen ist. Dies ist besonders dann sinnvoll, wenn das Karosserieaußenbauteil ein Dachelement ist. Das Dachelement kann entfernbar oder beweglich an einer Karosserie angeordnet sein.

Ferner besteht die Möglichkeit, daß das Dehnungsausgleichselement zwischen dem Innenbereich und einem Außenbereich angeordnet ist, d.h. innerhalb einer gesamten Fläche des Karosserieaußenbauteils integriert ist, anstatt eine äußere Randzone davon zu bilden. Beispielsweise kann der Innenbereich eine Dachfläche und der Außenbereich einen auf der Tragstruktur aufliegenden Bereich der Dachaußenhaut bilden.

Die Erfindung bezieht sich ferner auf ein Fahrzeug mit einem erfindungsgemäßen Karosserieaußenbauteil.

Weitere Vorteile und Merkmale der Erfindung ergeben sich aus der nachfolgenden Beschreibung von Ausführungsbeispielen, wobei auf eine Zeichnung Bezug genommen ist, in der
Fig. 1 eine erste Ausführungsform der Erfindung anhand einer perspektivischen Darstellung eines Dachbereichs eines Fahrzeugs zeigt, der unter Verwendung eines erfindungsgemäßen Karosserieaußenbauteils aufgebaut ist,
Fig. 2 eine Schnittansicht durch einen seitlichen Dachrahmen und einen Teil des sich daran anschließenden Karosserieaußenbauteils der ersten Ausführungsform nach Fig. 1 zeigt,
Fig. 3 eine zweite Ausführungsform anhand einer ähnlichen Ansicht wie Fig. 1 zeigt,
Fig. 4a eine perspektivische Schnittansicht durch einen seitlichen Dachrahmen bei der zweiten Ausführungsform gemäß Fig. 3 zeigt,
Fig. 4b einen Teilbereich von Fig. 4a in einem verformten Zustand zeigt, und
Fig. 5 anhand einer schematischen Schnittansicht durch einen seitlichen Dachrahmen, ähnlich Fig. 2 und 4, eine weitere Ausführungsform mit einem im Gasinnendruck-Verfahren hergestellten Kunststoffträger zeigt.

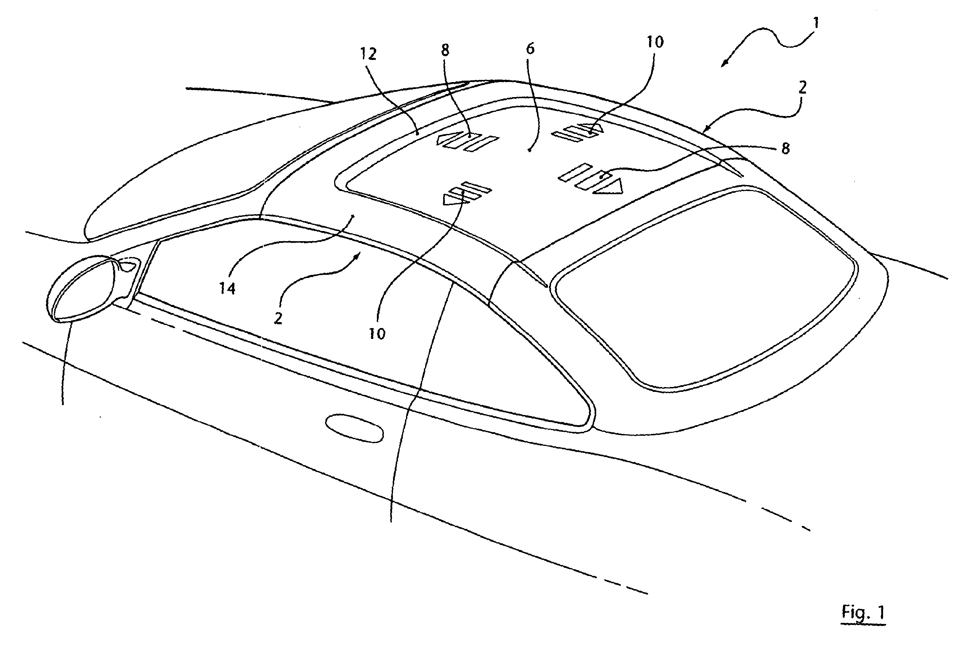

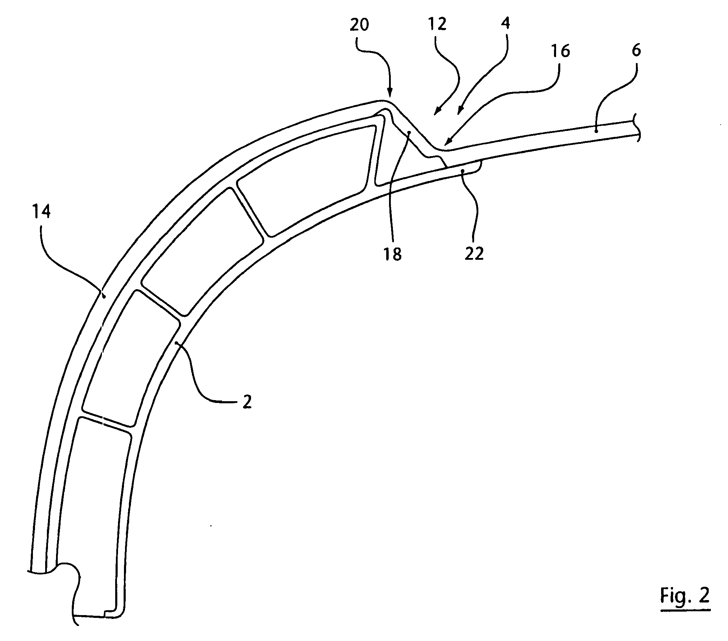

Fig. 1 und 2 erläutern eine erste Ausführungsform der Erfindung, wobei zunächst in Fig. 1 in einer schematischen, perspektivischen Ansicht ausschnittsweise ein Kraftfahrzeug und insbesondere dessen Dachbereich dargestellt ist. Ein Dachelement 1 ist durch ein erfindungsgemäßes Karosserieaußenbauteil gebildet und lösbar an der Karosserie angeordnet, so daß das Dachelement zur Nutzung des Kraftfahrzeug als Targafahrzeug entfernbar ist. Alternativ kann das Dachelement auch Teil eines beweglichen Dachs eines Cabriolet-Fahrzeugs oder fest mit der Karosserie verbunden sein.

Das Dachelement 1 ist im Spritzgußverfahren aus thermoplastischem Kunststoff gefertigt. Hierbei kommt bevorzugt das Zweikomponenten-Verfahren zur Anwendung, bei dem in einer Spritzgußform verschiedene Kunststoffe mit unterschiedlichen Eigenschaften zu einem gemeinsamen Bauteil vereinigt werden können. Auch ist es möglich, Einlagen wie z.B. Folien zur Schaffung von Oberflächenstrukturen zu verwenden.

In dem in Fig. 1 und 2 dargestellten Ausführungsbeispiel ist das aus Kunststoff gefertigte Dachelement 1 auf einer metallischen Tragstruktur in Form eines metallischen Grundträgers 2 montiert, der als rundum umlaufender Rahmen ausgebildet ist und die Steifigkeit des Dachelements 1 bzw. des Karosserieaußenbauteils liefert.

Das Dachelement 1 weist einen von einem umlaufenden Randbereich 4 umschlossenen Innenbereich 6 auf, der sich vor allem temperaturbedingt in allen Richtungen und insbesondere in innerhalb seiner Erstreckungsebene liegenden Richtungen ausdehnt und zusammenzieht, wobei als wesentliche, zu kompensierende Ausdehnungsrichtungen die Längsrichtung (Pfeile 8) und die Querrichtung (Pfeile 10) in Fig. 1 angedeutet sind.

Wie in Fig. 1 weiter angedeutet ist, ist entlang des Randbereichs 4, d.h. den Innenbereich 6 umgebend, ein Dehnungsausgleichselement 12 angeordnet, das in dem dargestellten Ausführungsbeispiel den Innenbereich 6 seitlich und vorn umgibt und somit insgesamt U-förmig konfiguriert ist. Außen an das Dehnungsausgleichselement 12 schließt sich eine Dachaußenhaut 14 aus thermoplastischem Kunststoff an, die im wesentlichen ebenfalls U-förmig konfiguriert ist und entlang der Grundträger 2 verläuft, an denen sie befestigt ist bzw. auf denen sie aufliegt (Fig. 2).

Fig. 2 erläutert Aufbau und Wirkungsweise des erfindungsgemäßen Dachelements 1. Der Innenbereich 6 ist über ein erstes Filmscharnier 16 mit einem Zwischenbereich 18 verbunden, der seinerseits über ein zweites Filmscharnier 18 mit der Dachaußenhaut 14 verbunden ist. Die beiden Filmscharniere 16, 20 sind im wesentlichen parallel zueinander angeordnet, wobei der Zwischenbereich 18 eine im wesentlichen konstante Breite (Querabmessung bzgl. der Erstreckungsrichtung der Filmscharniere 16, 20) aufweist, und sind in entgegengesetzten Richtungen abknickend angeordnet, so daß sich eine annähernd Z-förmige Konfiguration von Dachaußenhaut 14, Zwischenbereich 18 und Innenbereich 6 ergibt.

Wie Fig. 2 im einzelnen zeigt, liegt die Dachaußenhaut 14, die aus den seitlich an das Dehnungsausgleichselement 12 anschließenden Bereichen des Dachs besteht, auf den Grundträgern 2 auf, die als umlaufender Rahmen ausgebildet sind. Die Grundträger 2 bzw. der Rahmen können aus Metall oder auch aus Kunststoff gefertigt sein, wie weiter unten noch erläutert werden wird. Der Innenbereich 6, der in Fig. 2 lediglich angedeutet ist, kann mit Verstärkungsrippen oder sonstigen Verstärkungselementen versehen sein, und er kann mit seinen seitlichen Randbereichen an dem Grundträger 2 aufliegen, wie dies in Fig. 2 dargestellt ist.

Wird das Dach und insbesondere der Innenbereich 6, der den größten Teil der Dachfläche bildet, z.B. unter Sonneneinstrahlung stark erwärmt, so treten starke Ausdehnungen in dem thermoplastischen Material auf. Bei einer derartigen Ausdehnung, bei der das erste Filmscharnier 16 in Fig. 2 nach links bewegt wird, knicken die Filmscharniere zunehmend ab, so daß der Zwischenbereich 18 in eine steilere Lage in Bezug auf den Innenbereich 6 kommt. Aufgrund der Anordnung des Dehnungsausgleichselements 12 sowohl in Fahrtrichtung als auch quer dazu (Fig. 1) können auf diese Weise Ausdehnungsbewegungen des Innenbereichs 6 in allen Richtungen aufgefangen werden.

In dieser Ausführungsform besteht das erfindungsgemäße Karosserieaußenbauteil aus Innenbereich 6, Dehnungsausgleichselement 12 und Dachaußenhaut 14, die integral miteinander verbunden sind. Alternativ könnte das Karosserieaußenbauteil lediglich aus integral miteinander verbundenem Innenbereich und Dehnungsausgleichselement bestehen, das in geeigneter Weise an einer Tragstruktur zu befestigen wäre.

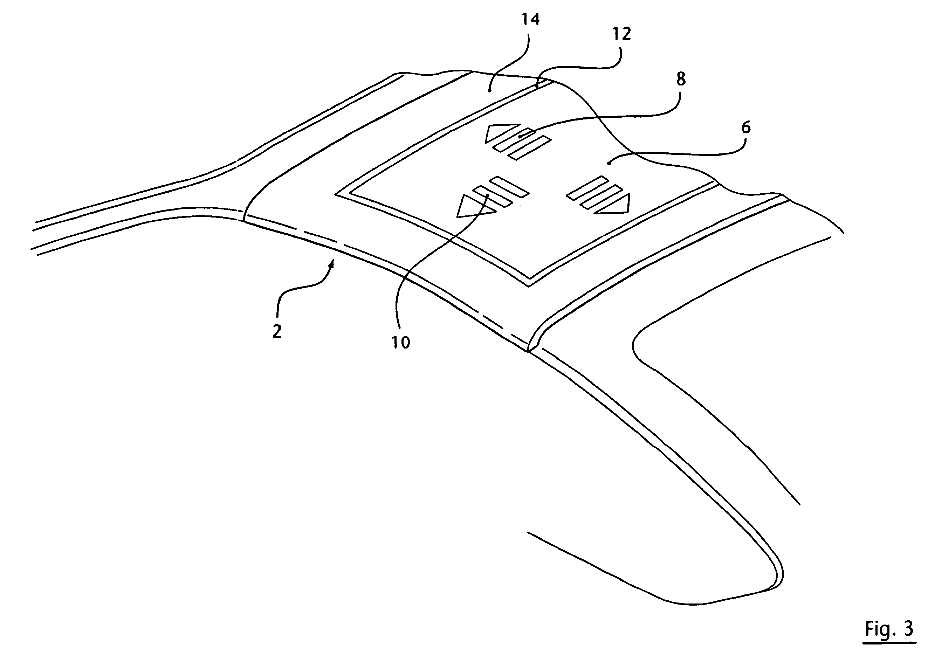

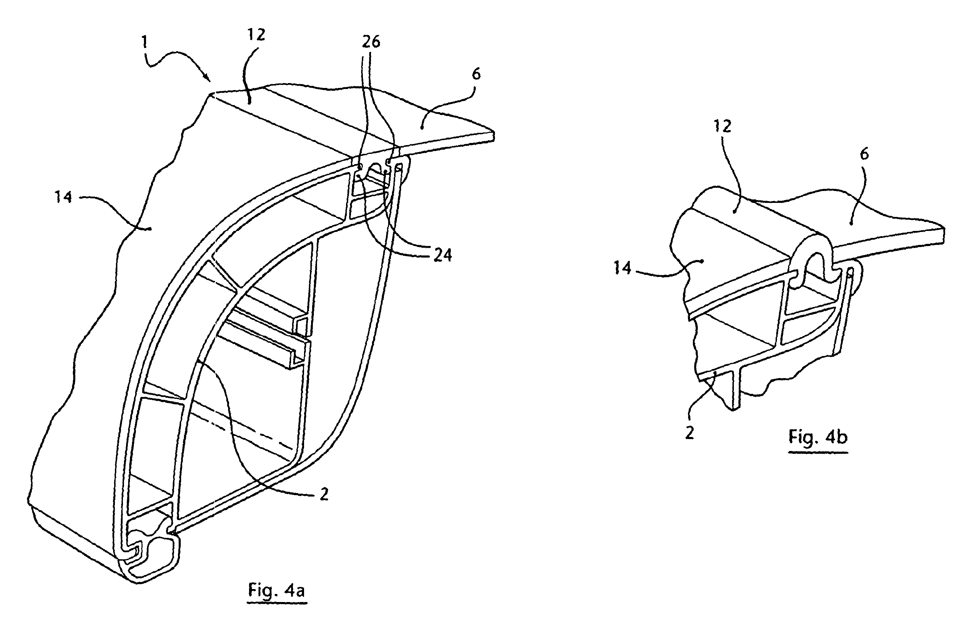

Fig. 3 und 4 erläutern eine weitere Ausführungsform der Erfindung, wobei in Fig. 3 eine ähnliche Situation wie in Fig. 1 dargestellt ist, nämlich ein Dachelement 1, dessen Innenbereich 6 über ein Dehnungsausgleichselement 12 mit einer umgebenden Dachaußenhaut 14 verbunden ist. Im Unterschied zu Fig. 1 erstreckt sich das Dehnungsausgleichselement 12 rechteckförmig, d.h. geschlossen um den dadurch abgeschlossenen Innenbereich 6 herum, wobei auch die Dachaußenhaut 14 geschlossen um das Dehnungsausgleichselement 12 herum verläuft. Ebenso wie bei der ersten Ausführungsform können dadurch Dehnungen des Innenbereichs 6 in sämtlichen Richtungen, insbesondere in Längsrichtung 8 und Querrichtung 10, ausgeglichen werden.

Wie Fig. 4a zeigt, ist das Dehnungsausgleichselement 12 in dieser Ausführungsform in Form eines profilierten Streifens aus elastischem, thermoplastischem Kunststoff im wesentlichen in einer Ebene mit dem Innenbereich 6 und der sich nach außen anschließenden Dachaußenhaut 14 ausgebildet. Dachaußenhaut 14, Dehnungsausgleichselement 12 und Innenbereich 6 sind im Zweikomponenten-Spritzgußverfahren als ein durchgehendes Bauteil ausgebildet, wobei die Dachaußenhaut 14 mit einer zusätzlich eingelegten Folie nach außen hin schwarz erscheint. Der Innenbereich 6 kann durchsichtig gestaltet sein.

Der Innenbereich 6 ist im Vergleich zu dem elastischen Kunststoff des Dehnungsausgleichselements 12 aus einem im wesentlichen starren Kunststoff hergestellt und in seinem Randbereich 4, an dem die einteilige Verbindung zu dem Dehnungsausgleichselement 12 besteht, auf einer Auflage 22 des Grundträgers 2 abgestützt. Das profilierte Dehnungsausgleichselement 12 weist zwei Flanschabschnitte 24 auf, mit denen es flanschartige Vorsprünge 26 des Grundträgers 2 untergreift, wodurch das Dachelement 1 an dem Grundträger 2 gehalten ist.

Auch in diesem Ausführungsbeispiel kann der Innenbereich 6 mit Verrippungen o.ä. zur weiteren Aussteifung versehen sein.

Wenn das Dach z.B. unter Sonneneinstrahlung stark erwärmt wird, dehnt sich insbesondere der Innenbereich 6 stark aus, wobei derartige Längenänderungen von dem Dehnungsausgleichselement 12 aufgenommen werden, indem dieses zusammengedrückt wird. Dabei kann sich in Extremfällen eine nach außen gerichtete Wölbung einstellen, wie in Fig. 4b dargestellt ist. Durch konstruktive Anpassungen des Dehnungsausgleichselements 12 kann eine derartige Wölbung klein gehalten werden oder auch eine Wölbung nach innen hin erzielt werden.

Obwohl temperaturbedingte Ausdehnungen der Dachaußenhaut 14, d.h. derjenigen Bereiche, die sich außerhalb des Dehnungsausgleichselements 12 an dieses anschließen, bereits aufgrund der relativ geringen Abmessungen dieser Bereiche im Vergleich zu denen des Innenbereichs 6 vergleichsweise gering sind, sieht die Erfindung bevorzugt vor, daß zum Ausgleich auch dieser Ausdehnungen die genannten Bereiche, d.h. die Dachaußenhaut 14, einstückig mit dem Innenbereich 6 und dem Dehnungsausgleichselement 12 hergestellt sind, d.h. in diesem Fall besteht das Dachelement 1 bzw. das erfindungsgemäße Kunststoffaußenbauteil aus Innenbereich 6, Dehnungsausgleichselement 12 und Dachaußenhaut 14, die alle in ein und derselben Spritzgußform im Zweikomponenten-Verfahren aus thermoplastischen Kunststoffen im Spritzgußverfahren hergestellt sind.

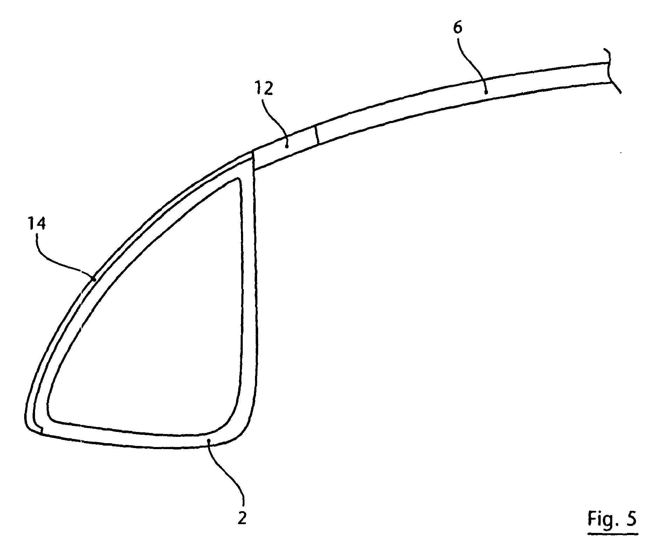

Fig. 5 erläutert einen noch weitergehend integrierten Aufbau eines erfindungsgemäßen Kunststoffaußenbauteils 1, bei dem nicht nur ein Dachelement, sondern zusätzlich ein Grundträger 2 aus Kunststoff hergestellt ist, wobei bevorzugt Grundträger und Dachelement in ein und demselben Spritzgußwerkzeug hergestellt werden und zur Erzeugung des Grundträgers (Hohlprofil) das Gasinnendruck-Verfahren angewendet wird. Diejenigen Bereiche, die der vorstehend erläuterten Dachaußenhaut 14 entsprechen, können in diesem Fall als thermoplastische Folie (Dekor) in die Spritzgußform eingebracht und mit dem Grundträger 2 integral verbunden werden.

### Bezugszeichenliste:

- 1: Dachelement (Karossieaußenbauteil)
- 2: Grundträger (Trägerstruktur)
- 4: Randbereich
- 6: Innenbereich
- 8: Pfeil (Längsausdehnung)
- 10: Pfeil (Querausdehnung)
- 12: Dehnungsausgleichselement
- 14: Dachaußenhaut
- 16: erstes Filmscharnier
- 18: Zwischenbereich
- 20: zweites Filmscharnier
- 22: Auflage (von 2)
- 24: Flanschabschnitt (von 12)
- 26: Flanschabschnitt (von 2)

## Patentansprüche

1. Karosserieaußenbauteil aus Kunststoff zur Befestigung an einer Tragstruktur (2), mit einem Innenbereich (6) und einem daran angrenzenden Randbereich (4), wobei ein Dehnungsausgleichselement (12) zumindest entlang eines Teilabschnitts des Randbereichs (4) angeordnet und integral damit verbunden ist, **dadurch gekennzeichnet, daß** das Karossieraußenbauteil im Zweikomponenten-Spritzgießverfahren hergestellt ist.

2. Karosserieaußenbauteil nach Anspruch 1, **dadurch gekennzeichnet, daß** das Dehnungsausgleichselement (12) einstückig mit dem Innenbereich (6) verbunden ist.

3. Karosserieaußenbauteil nach Anspruch 1, **dadurch gekennzeichnet, daß** das Dehnungsausgleichselement (12) formschlüssig und ggf. zugfest mit dem Innenbereich (6) verbunden ist, insbesondere durch eine ineinandergreifende Profilierung.

4. Karosserieaußenbauteil nach einem der vorangehenden Ansprüche, **dadurch gekennzeichnet, daß** das Dehnungsausgleichselement (12) parallel zu dem Randbereich (4) angeordnet ist.

5. Karosserieaußenbauteil nach einem der vorangehenden Ansprüche, **dadurch gekennzeichnet, daß** das Dehnungsausgleichselement (12) geschlossen umlaufend entlang des gesamten Randbereichs (4) angeordnet ist.

6. Karosserieaußenbauteil nach einem der vorangehenden Ansprüche, **dadurch gekennzeichnet, daß** das Dehnungsausgleichselement (12) mindestens an zwei Randabschnitten angeordnet ist, die nicht parallel zueinander verlaufen.

7. Karosserieaußenbauteil nach einem der vorangehenden Ansprüche, **dadurch gekennzeichnet, daß** das Dehnungsausgleichselement (12) aus einem elastischen Kunststoff besteht.

8. Karosserieaußenbauteil nach einem der vorangehenden Ansprüche, **dadurch gekennzeichnet, daß** das Dehnungsausgleichselement (12) zwei in einem Abstand verlaufende, in entgegengesetzten Richtungen abknickende Filmscharniere (16, 20) aufweist, durch die ein Absatz gebildet wird.

9. Karosserieaußenbauteil nach einem der vorangehenden Ansprüche, **dadurch gekennzeichnet, daß** das Dehnungsausgleichselement (12) an der Tragstruktur (2) abgestützt ist.

10. Karosserieaußenbauteil nach einem der vorangehenden Ansprüche, **dadurch gekennzeichnet, daß** der Innenbereich (6) an der Tragstruktur (2) abgestützt ist.

11. Karosserieaußenbauteil nach einem der vorangehenden Ansprüche, **dadurch gekennzeichnet, daß** das Karosserieaußenbauteil zusammen mit der Tragstruktur in einem Werkzeug hergestellt ist.

12. Karrosserieaußenbauteil nach einem der vorangehenden Ansprüche, **dadurch gekennzeichnet, daß** die Tragstruktur im Gasinnendruck-Verfahren einstückig mit dem Karosserieaußenbauteil hergestellt ist.

13. Karosserieaußenbauteil nach einem der vorangehenden Ansprüche, **dadurch gekennzeichnet, daß** der Innenbereich des Karosserieaußenbauteils mit einem durchsichtigen Kunststoff versehen ist.

14. Karosserieaußenbauteil nach einem der vorangehenden Ansprüche, **dadurch gekennzeichnet, daß** es sich um ein Dachelement (1) handelt.

15. Karosserieaußenbauteil nach einem der vorangehenden Ansprüche, **dadurch gekennzeichnet, daß** das Dehnungsausgleichselement (12) zwischen dem Innenbereich (6) und einem Außenbereich (14) angeordnet ist.

16. Fahrzeug mit einem Karosserieaußenbauteil (1) nach einem der vorangehenden Ansprüche.

17. Fahrzeug nach Anspruch 16, **dadurch gekennzeichnet, daß** das Karosserieaußenbauteil als Dachelement (1) ausgebildet ist, welches entfernbar oder beweglich an einer Karosserie des Fahrzeugs angeordnet ist.

## Claims

1. Exterior bodywork part from plastic for fastening to a supporting structure (2), with an inner region (6) and an edge region (4) adjacent thereto, with an expansion compensating element (12) being arranged at least along a subsection of the edge region (4) and being connected integrally therewith, **characterized in that** the exterior bodywork part is produced by two-component injection moulding.

2. Exterior bodywork part according to Claim 1, **characterized in that** the expansion compensating element (12) is connected integrally to the inner region (6).

3. Exterior bodywork part according to Claim 1, **characterized in that** the expansion compensating element (12) is connected to the inner region (6) in a form-fitting manner and, if appropriate, in a manner strong in tension, in particular by means of an interengaging profiling.

4. Exterior bodywork part according to one of the preceding claims, **characterized in that** the expansion compensating element (12) is arranged parallel to the edge region (4).

5. Exterior bodywork part according to one of the preceding claims, **characterized in that** the expansion compensating element (12) is arranged peripherally in a closed manner along the entire edge region (4).

6. Exterior bodywork part according to one of the preceding claims, **characterized in that** the expansion compensating element (12) is arranged at least on two edge sections which do not run parallel to each other.

7. Exterior bodywork part according to one of the preceding claims, **characterized in that** the expansion compensating element (12) is composed of an elastic plastic.

8. Exterior bodywork part according to one of the preceding claims, **characterized in that** the expansion compensating element (12) has two film hinges (16, 20) which run at a distance, buckle in opposite directions and by means of which a step is formed.

9. Exterior bodywork part according to one of the preceding claims, **characterized in that** the expansion compensating element (12) is supported on the supporting structure (2).

10. Exterior bodywork part according to one of the preceding claims, **characterized in that** the inner region (6) is supported on the supporting structure (2).

11. Exterior bodywork part according to one of the preceding claims, **characterized in that** the exterior bodywork part is produced together with the supporting structure in a die.

12. Exterior bodywork part according to one of the preceding claims, **characterized in that** the supporting structure is produced integrally with the exterior bodywork part by the gas internal-pressure method.

13. Exterior bodywork part according to one of the preceding claims, **characterized in that** the inner region of the exterior bodywork part is provided with a transparent plastic.

14. Exterior bodywork part according to one of the preceding claims, **characterized in that** it is a roof element (1).

15. Exterior bodywork part according to one of the preceding claims, **characterized in that** the expansion compensating element (12) is arranged between the inner region (6) and an outer region (14).

16. Vehicle with an exterior bodywork part (1) according to one of the preceding claims.

17. Vehicle according to Claim 16, **characterized in that** the exterior bodywork part is designed as a roof element (1) which is arranged removeably or moveably on the vehicle bodywork.

## Revendications

1. Composant extérieur de carrosserie, en matière synthétique, pour la fixation à une structure porteuse (2), avec une zone intérieure (6) et une zone de bordure (4), lui étant limitrophe, sachant qu'un élément de compensation de la dilation (12) est disposé au moins le long d'un tronçon partiel de la zone de bordure (4) et lui est relié de façon monolithique, **caractérisé en ce que** le composant extérieur de carrosserie est fabriqué selon un procédé de moulage par injection à deux composants.

2. Composant extérieur de carrosserie selon la revendication 1, **caractérisé en ce que** l'élément de compensation de la dilatation (12) est relié d'une seule pièce à la zone intérieure (6).

3. Composant extérieur de carrosserie selon la revendication 1, **caractérisé en ce que** l'élément de compensation de la dilatation (12) est relié, par une liaison à ajustement de forme et, le cas échéant, de façon résistante à la traction, à la zone intérieure (6), en particulier au moyen d'un profilage opérant avec engagement l'un à l'intérieur de l'autre.

4. Composant extérieur de carrosserie selon l'une des revendications précédentes **caractérisé en ce que** l'élément de compensation de la dilatation (12) est disposé parallèlement à la zone de bordure (4).

5. Composant extérieur de carrosserie selon l'une des revendications précédentes **caractérisé en ce que** l'élément de compensation de la dilatation (12) est disposé en formant un pourtour fermé le long de l'ensemble de la zone de bordure (4).

6. Composant extérieur de carrosserie selon l'une des revendications précédentes, **caractérisé en ce que** l'élément de compensation de la dilatation (12) est disposé au moins en deux tronçons de bordure ne s'étendant pas parallèlement l'un à l'autre.

7. Composant extérieur de carrosserie selon l'une des revendications précédentes, **caractérisé en ce que** l'élément de compensation de la dilatation (12) est composé d'une matière synthétique élastique.

8. Composant extérieur de carrosserie selon l'une des revendications précédentes, **caractérisé en ce que** l'élément de compensation de la dilatation (12) présente deux charnières-film (16, 20), s'étendant selon un espacement et étant infléchies dans des directions opposées, charnières au moyen desquelles est formé un décrochement.

9. Composant extérieur de carrosserie selon l'une des revendications précédentes, **caractérisé en ce que** l'élément de compensation de la dilatation (12) est soutenu sur la structure support (2).

10. Composant extérieur de carrosserie selon l'une des revendications précédentes, **caractérisé en ce que** la zone intérieure (6) est soutenue dans la structure support (2).

11. Composant extérieur de carrosserie selon l'une des revendications précédentes, **caractérisé en ce que** le composant extérieur de carrosserie est fabriqué conjointement avec la structure support, dans un outil.

12. Composant extérieur de carrosserie selon l'une des revendications précédentes, **caractérisé en ce que** la structure support est fabriquée selon un procédé travaillant par pression intérieure de gaz, d'une seule pièce avec le composant extérieur de carrosserie.

13. Composant extérieur de carrosserie selon l'une des revendications précédentes, **caractérisé en ce que** la zone intérieure du composant extérieur de carrosserie est munie d'une matière synthétique transparente.

14. Composant extérieur de carrosserie selon l'une des revendications précédentes, **caractérisé en ce qu'**il s'agit d'un élément de toit (1).

15. Composant extérieur de carrosserie selon l'une des revendications précédentes, **caractérisé en ce que** l'élément de compensation de la dilatation (12) est disposé entre la zone intérieure (6) et une zone extérieure (14)

16. Véhicule avec un composant extérieur de carrosserie (1) selon l'une des revendications précédentes.

17. Véhicule selon la revendication 16, **caractérisé en ce que** le composant extérieur de carrosserie est réalisé sous la forme d'élément de toit (1), qui est disposé en pouvant être enlevé ou étant déplaçable sur une carrosserie du véhicule.
